Europäisches Patentamt

(19) European Patent Office

Office européen des brevets

(11) Veröffentlichungsnummer: **0 117 890**
**A2**

## (12) EUROPÄISCHE PATENTANMELDUNG

(21) Anmeldenummer: 83104028.2

(22) Anmeldetag: 25.04.83

(51) Int. Cl.³: **E 02 B 15/04**

(30) Priorität: 29.01.83 DE 3302964
16.02.83 DE 3305223

(43) Veröffentlichungstag der Anmeldung:
12.09.84 Patentblatt 84/37

(84) Benannte Vertragsstaaten:
AT BE CH DE FR GB IT LI LU NL SE

(71) Anmelder: Heyen, Johannes
Pollerstrasse 167
D-2964 Wiesmoor(DE)

(72) Erfinder: Heyen, Johannes
Pollerstrasse 167
D-2964 Wiesmoor(DE)

(74) Vertreter: Jabbusch, Wolfgang, Dr.
Elisabethstrasse 6
D-2900 Oldenburg(DE)

(54) Vorrichtung zur Beseitigung von insbesondere Ölverunreinigungen auf Wasseroberflächen.

(57) Zur Beseitigung von auf Gewässeroberflächen schwimmendem Öl ist ein Bindemittel in ein allseitig flüssigkeitsdurchlässiges Schwimm-Behältnis gefüllt. Das Schwimm-Behältnis ist mit der verunreinigten Gewässeroberfläche in Kontakt bringbar. Vorzugsweise ist das Schwimm-Behältnis eine das Bindemittel umschließende mattenförmige Hülle aus textilem Material. Das Bindemittel z.B. geblähter Glimmer ist hydrophobierend, so daß es kein Wasser aufsaugen kann, jedoch begierig Öl aufsaugt.

EP 0 117 890 A2

- 1 -          0117890

Herr Johannes Heyen, Pollerstr. 167, 2964 Wiesmoor

Vorrichtung zur Beseitigung von insbesondere Ölverunreinigungen
auf Wasseroberflächen

Die Erfindung betrifft eine Vorrichtung zur Beseitigung von auf
Gewässeroberflächen schwimmenden, flüssigen Verunreinigungen,
insbesondere Ölverunreinigungen, mit einem Bindemittel.

Es ist bekannt, daß Gewässerverunreinigungen äußerst schädliche Auswirkungen auf die natürlichen ökologischen Verhältnisse haben. Insbesondere Öle führen sowohl zu kurzfristigen als
auch zu längerfristigen Schädigungen. Von der einschlägigen
Industrie werden natürliche und chemische Mittel angeboten,
welche auf die Gewässeroberfläche aufgetragen, das Öl binden
und danach abgeschöpft werden können. Die bekannten Bindemittel sind feste oder flüssige schüttfähige Massen, mit denen
wasserverschmutzende Öle gebunden, dabei aber schwimmend gehalten und zusammen mit dem adsorbierten Öl von der Wasseroberfläche abgenommen werden.

Die bekannten Bindemittel sind hinsichtlich ihrer Ölaufnahmeeigenschaften recht unterschiedlich, jedoch lassen sich im
allgemeinen mit den Bindern befriedigende Entölungsergebnisse
erreichen, wenn es gelingt die Bindemittel großoberflächig
und einigermaßen gleichmäßig auf die Gewässeroberflächen aufzutragen. Gerade dieses Ziel ist jedoch bei Verunreinigungen
in Küsten- und Seegebieten bei Seegang und Strömung nicht mehr
zu erreichen. Das Öl bildet nämlich, bedingt durch Seegang,
Wind und Strömung, in solchen Einsatzgebieten gewöhnlich keinen gleichmäßig zusammenhängenden "Teppich". Das als lose Schüttmasse auf die bewegte Wasseroberfläche aufgebrachte Bindemittel wird ebenfalls durch Wind, Seegang und Strömung unter Umständen aus dem eigentlichen Einsatzgebiet herausgetrieben, bevor es mit dem zu beseitigenden Öl überhaupt in Kontakt gekommen ist. Ein weiterer Nachteil der bekannten Bindemittel ist dadurch gegeben, daß die Abschöpfung nach dem Einsatz, insbesondere bei Seegang, äußerst schwierig ist und kaum vollständig gelingt. Demzufolge können auch größere Teile des Bindemittels nach einer längeren Zeit noch an Stränden und Küsten angeschwemmt werden und während des Treibens und der Lagerzeit an den Küsten langsam "ausbluten", wobei das adsorbierte Öl zum Teil wieder aus dem Bindemittelteilchen austritt und doch noch zu Umweltschäden führt.

Die vom Seegang stark bewegten Teilchen des Bindemittels neigen allein durch eine solche Bewegung schon zu stärkerem Ausbluten, vor allem dann, wenn durch eine nicht vermeidbare ungleichmäßige Verteilung auf der bewegten Wasseroberfläche bei einigen dünner verteilten Bindemittelanteilen eine relativ schnelle Erschöpfung des Öladsorptionsvermögens erfolgt, bei welcher dann erhöhte Gefahr des Ausblutens gegeben ist, während andere Anteile des Bindemittels ungenutzt oder nur zum geringen Teil gesättigt aus dem Einsatzbereich abtreiben oder bereits abgeschöpft sind.

Der Erfindung liegt die Aufgabe zugrunde, das Bindemittel kontrolliert im Einsatzgebiet halten zu können und das Entfernen des hinsichtlich seines Adsorptionsvermögens erschöpften Bindemittels erleichtern.

In Lösung dieser Aufgabe ist eine Vorrichtung geschaffen worden, die sich erfindungsgemäß auszeichnet durch ein mit der verunreinigten Gewässeroberfläche in Kontakt bringbares allseitig flüssigkeitsdurchlässiges Schwimm-Behältnis, das mit dem Bindemittel gefüllt ist.

Durch das Behältnis wird das Bindemittel auch bei Seegang zusammengehalten und kann seine Wirkung bis zur vollständigen Sättigung direkt im Einsatzgebiet erfüllen. Das Behältnis kann derart ausgebildet sein, daß es eine mehr oder weniger flächige Ausdehnung aufweist, wobei die Höhe des Behältnisses etwa der gewünschten Schichtdicke des Bindemittels entsprechen kann. Die Durchlässigkeit der Behältniswandungen erlaubt eine freie Einströmung von Wasser und Öl. Indem die im Behältnis befindlichen Bindemittelteilchen davon umspült werden, kann das Öl aufgesaugt werden. Das Wasser kann wieder abfließen.

Nach dem Aufsaugen des Öls kann das Behältnis auf einfachste Weise vom Einsatzort entfernt werden, indem es entweder aus dem Wasser herausgehoben wird, oder vor dem Herausheben zunächst zur nahen Küste oder in einen Hafen geschleppt wird. Mit Vorteil können auch mehrere Behältnisse gleichzeitig zum Einsatz gebracht werden, in dem sie abgeworfen oder langsam durch den verschmutzten Gewässerbereich, z.B. durch Schleppen mit Schwimmfahrzeugen, bewegt werden. Das Behältnis kann die Form eines flachen kistenartigen Drahtkäfigs aufweisen. Auch Kunststoffgitter, z.B. zusammenfügbare Gitter, können verwendet werden.

Nach einer zweckmäßigen Weiterbildung ist das Behältnis eine das Bindemittel umschließende Hülle aus textilem Material.

Die Hülle aus textilem Material ist allseitig flüssigkeitsdurchlässig, so daß Öl und Wasser ohne weiteres an das Bindemittel gelangen können. Eine Hülle aus textilem Material ist auch einfach durch Nähen herstellbar. Durch das geringe spezifische Gewicht des Bindemittels ist die Schwimmfähigkeit gewährleistet und bei Seegang ist die Flexibilität des Materials von Vorteil.

Eine bevorzugte Raumform der Hülle ist die Mattenform, die in beliebiger Dimensionierung herstellbar ist. Vorzugsweise weist eine gefüllte Hülle eine Dicke von 2-30 cm auf. Länge und Breite können den jeweiligen Einsatzzwecken angepaßt werden.

Das textile Material für eine Hülle kann ein reißfestes Gewebe oder ein Vlies sein. Mit Vorteil können Hüllen aus solchem Textilmaterial gefertigt werden, welches sich bereits auf dem Gebiet des Wasserbaus gewährt hat, wie z.B. Filtervliese aus Kunststoff für Sohlen- und Böschungsbefestigungen.

Mehrere mattenförmige Hüllen können nach einer anderen Weiterbildung auch in vorteilhafter Weise über randseitig angeordnete Verbindungselemente miteinander verbindbar sein. Dadurch ist eine angestrebte großflächige Abdeckung der verunreinigten Wasseroberfläche möglich. Die gegenseitige Verbindung kann auch mit Vorteil beim Abtransport ölgesättigter, mattenförmiger Behältnisse genutzt werden. Die Verbindungselemente können z.B. am Randbereich eingearbeitete Ösen sein, die ein Zusammenbinden erlauben oder eine Koppelung über Schnapphaken o. dgl.

Die Matten mit Bindemittelfüllung lassen sich auch aufrollen und sind dadurch z.B. mit Helikoptern zum Einsatzort bringbar. Auch Wasserfahrzeuge aller Art, größere Schiffe als auch kleinere Kutter oder sogar Wassersportfahrzeuge, sind für den Transport der Matten geeignet.

Aufgerollt oder teilweise aufgerollt können die Matten mit Bindemittelfüllung, insbesondere durch die vorbeschriebene Verbindungsmöglichkeit , auch als Ölsperren ausgelegt werden. Geringer dimensionierte Matten, z.B. mit ca. 20 m² Flächenabdeckung, können auch in kleineren und mittleren Häfen zur Ölbeseitigung Anwendung finden.

Nachdem das in einem mattenförmigen Behältnis befindliche Bindemittel mit Öl gesättigt ist, kann die Matte an Land oder in einen Hafen geschleppt, aufgerollt und in eine ölfeste Folie eingeschweißt werden, oder auf andere Weise beseitigt werden.

Selbstverständlich kann als Hülle für die Aufnahme von Bindemittel auch ein geeignetes Netz eingesetzt werden, dessen Maschenweite so eng sein muß, daß das Bindemittel zurückgehalten wird. Mit solchen Netzen lassen sich auf einfachste Weise im Einsatzfall sehr schnell großvolumige Säcke herstellen, die sofort ins Wasser geworfen werden können, um das Öl aufzusaugen.

Ein erfindungswesentlicher Vorteil ist auch dadurch gegeben, daß das Behältnis eigene Schwimmfähigkeit aufweisen kann, was den Einsatz nicht schwimmfähiger Bindemittel erlaubt, die bisher nicht verwendbar waren.

Bei der Auswahl geeigneter Bindemittel kommt es besonders auf deren Schwimmfähigkeit an, es sei denn, das Behältnis hat eigene Auftriebselemente. Das in Verbindung mit der erfindungsgemäßen Vorrichtung zu verwendende Bindemittel soll möglichst auch nach der Sättigung mit adsorbiertem Öl unsinkbar oder zumindest sehr lange Zeit schwimmfähig bleiben. Ein dieser Forderung in besonders vorteilhafter Weise genügendes Bindemittel zeichnet sich dadurch aus, daß es ein poröses Mineral mit bestimmter Körnung ist, dessen Kornteilchen mit einem hydrophobierenden Präparat durchtränkt sind.

Ein Mineral ist eigentlich nicht besonders schwimmfähig und kann ohne weiteres Wasser aufsaugen. Das hydrophobierende Präparat ist in einem Lösungsmittel gelöst, und kann, ebenso wie Wasser, in die Poren des Minerals eindringen. Nach der natürlichen Verdunstung des Lösungsmittels kann das Mineral dann kein Wasser mehr aufnehmen. Wird das behandelte Mineral jedoch mit Öl benetzt, erfolgt ein Eindringen in die Poren, wobei das Aufsaugen des Öls durch die Kapillarwirkung der Poren in vorteilhafter Weise beschleunigt wird.

Ein bevorzugtes Mineral für das Bindemittel ist z. B. geblähter Glimmer. Eine Art des geblähten Glimmers ist auch das Vermiculite. Dieses wird als Isoliermaterial im Bauwesen verwendet und steht daher bereits in größeren Mengen zur Verfügung. Nach der Behandlung mit einem hydrophobierenden Präparat ist Vermiculite ausgezeichnet als Bindemittel zu verwenden.

Es ist jedoch auch möglich, geblähten Ton z.B. in Form von Tonkügelchen nach der Durchtränkung mit dem hydrophobierenden Präparat als Bindemittel einzusetzen. Selbstverständlich können auch Mischungen z.B. mit Torf oder anderen bekannten Bindemitteln verwendet werden

Als hydrophobierende Präparate sind hochvernetzte und/oder oligomere Silikone, Siloxane, Silane, Alkysilikonate und/oder andere Präparate aus der Reihe der Organosilikate zur Behandlung des porösen Minerals, insbesondere des geblähten Vermiculites, bevorzugt geeignet.

Das Bindemittel weist mit Vorteil eine Korngröße von 0-10 mm auf. Die Kornverteilung kann dabei einer Körnungslinie nach Fuller-Kurre entsprechen. Ein derart gekörntes, von der mattenförmigen Hülle umschlossenes Bindemittel bietet dem zu adsorbierenden Öl eine größere, benetzbare Oberfläche, durch die eine Ölaufnahme beschleunigt wird. Größere mattenförmige Behältnisse aus textilem Material können auch mit Steppnähten in Bereiche unterteilt sein, die ein Verrutschen der Bindemittelfüllung vermeiden.

Ausführungsbeispiele der Erfindung, aus denen sich weitere erfinderische Merkmale ergeben, sind in der Zeichnung dargestellt. Es zeigen:

Fig. 1 zwei auf einer Wasseroberfläche schwimmende
mattenförmige Hüllen mit Bindemittelfüllung

Fig. 2 eine Ausführungsmöglichkeit des Transports
mehrerer mattenförmiger Hüllen und

Fig. 3 eine besonders einfache Ausführungsform eines
mit Bindemitteln gefüllten Behältnisses.

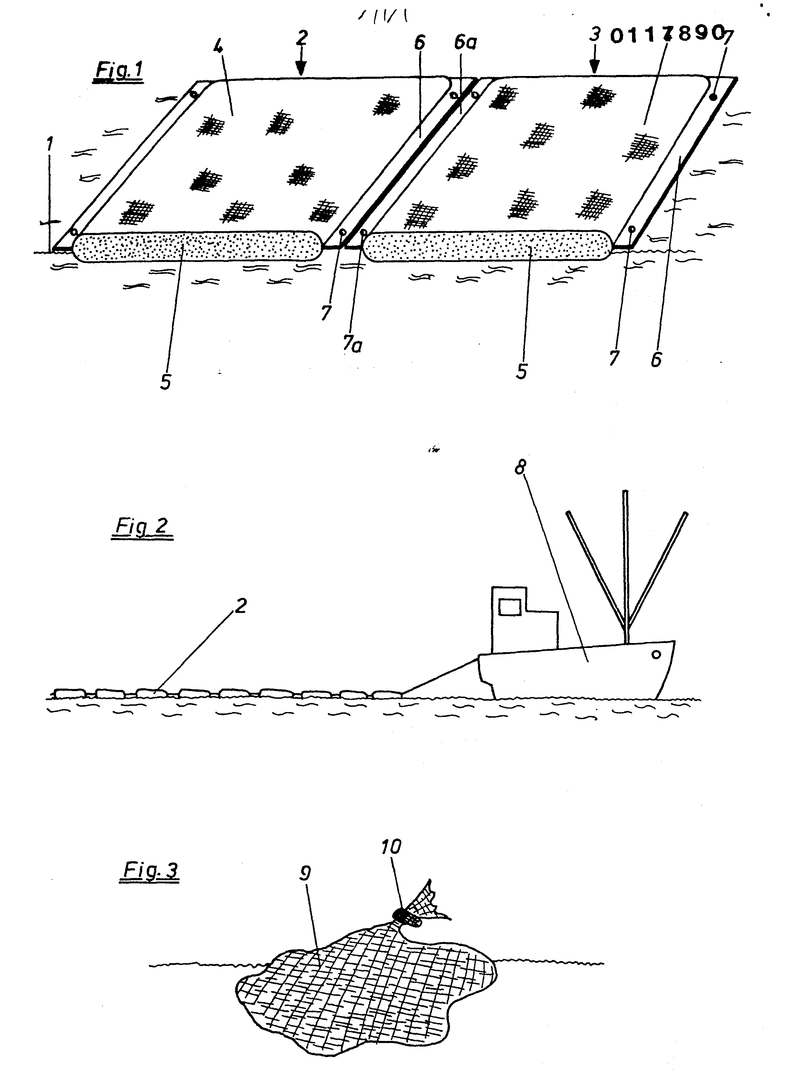

In Fig. 1 sind zwei nebeneinander auf einer mit Öl verschmutzten Wasseroberfläche 1 schwimmende Behältnisse 2 und 3 dargestellt. Die Behältnisse sind hier im Querschnitt dargestellt. Die Behältnisse 2 und 3 bestehen aus mattenförmigen Gewebehüllen 4, die derart genäht sind, daß ein körniges Bindemittel 5 in bestimmter Schichtdicke eingefüllt werden kann. Die Gewebestruktur der Hüllen 4 ist derart, daß Wasser und Öl allseitig ungehindert durchtreten kann, um an die Bindemittelfüllung 5 zu gelangen. Das Bindemittel wird jedoch zurückgehalten und kann nicht aus den Behältnissen 2 und 3 austreten.

Bei diesem Ausführungsbeispiel weisen die Behältnisse 2 und 3 angeformte Randsäume 6 auf, die mit eingenähten Ösen 7 versehen sind. Die einander benachbarten Randsäume 6 und 6a der Behältnisse 2 und 3 können mit Hilfe der einander dabei gegenüberliegenden Ösen 7 und 7a durch Verknüpfen mit einem Schnapphaken, Seil oder dergleichen verbunden werden. Somit lassen sich mehrere Behältnisse für eine größere Flächenabdeckung beliebig zusammensetzen.

Die Zusammensetzbarkeit der das Bindemittel aufnehmenden Behältnisse ist auch für den Transport zur Einsatzstelle oder von der Einsatzstelle zur Küste oder in einen Hafen besonders vorteilhaft, denn mehrere miteinander verbundene Behältnisse können durch ein Schwimmfahrzeug ohne weiteres geschleppt werden. Die in Figur 2 angedeutete Transportmöglichkeit kann selbstverständlich auch dazu genutzt werden, die Behältnisse am Einsatzort durch den verschmutzten Bereich einer Wasseroberfläche zu schleppen.

In Fig. 3 ist eine besonders einfache Ausführungsform eines mit Bindemittel füllbaren Behältnisses dagestellt.Ein feinmaschiges Netz 9 oder ein entsprechendes Gewebetuch ist sackartig um eine lose Schüttung von Bindemittel gelegt und bei 10 zugebunden. Solche Behältnisse lassen sich einfach und schnell herstellen und können im Einsatzgebiet ins Wasser geworfen werden. Die Flächenabdeckung ist dabei jedoch nicht derart optimal, wie bei den mattenförmigen Behältnissen 2 und 3 gemäß Fig. 1, jedoch bietet diese Ausführungsform den Vorteil, daß sie besonders einfach ist und in einem Einsatzfall schnell zur Verfügung steht.

- 1 -                                    0117890

Patentansprüche:

1. Vorrichtung zur Beseitigung von auf Gewässeroberflächen schwimmenden flüssigen Verunreinigungen, insbesondere Ölverunreinigungen , mit einem Bindemittel
gekennzeichnet durch,
ein mit der verunreinigten Gewässeroberfläche in Kontakt bringbares allseitig flüssigkeitsdurchlässiges Schwimm-Behältnis (2,3,9), das mit dem Bindemittel (5) gefüllt ist.

2. Vorrichtung nach Anspruch 1, dadurch gekennzeichnet, daß das Behältnis (2,3,9) eine das Bindemittel (5) umschließende Hülle (4) aus textilem Material ist.

3. Vorrichtung nach Anspruch 2, dadurch gekennzeichnet, daß die Hülle (4) aus textilem Material Mattenform aufweist.

4. Vorrichtung nach einem der vorhergehenden Ansprüche, dadurch gekennzeichnet, daß das textile Material ein Gewebe ist.

5. Vorrichtung nach einem der Ansprüche 1-3, dadurch gekennzeichnet, daß das textile Material ein Vlies ist.

6. Vorrichtung nach einem der Ansprüche 2-5, dadurch gekennzeichnet, daß die Hülle durch Absteppungen in Bereiche unterteilt ist.

7. Vorrichtung nach einem der vorhergehenden Ansprüche, dadurch gekennzeichnet, daß mehrere mattenförmige Hüllen (4) über randseitig angeordnete Verbindungselemente (6,7,6a,7a) miteinander verbindbar sind.

8. Vorrichtung nach einem der vorhergehenden Ansprüche,dadurch gekennzeichnet, daß das Bindemittel ein poröses Mineral bestimmter Körnung ist, dessen Kornteilchen mit einem hydrophobierenden Präparat durchtränkt sind.

9. Vorrichtung nach Anspruch 8, dadurch gekennzeichnet, daß das Mineral für das Bindemittel geblähter Glimmer, vorzugsweise Vermiculite ist.

10. Vorrichtung nach Anspruch 8, dadurch gekennzeichnet, daß das Mineral für das Bindemittel geblähter Ton ist.

11. Vorrichtung nach einem der Ansprüche 8-10, dadurch gekennzeichnet, daß das hydrophobierende Präparat ein Organosilikat ist.

12. Vorrichtung nach einem der Ansprüche 8-10, dadurch gekennzeichnet, daß die Teilchen des Bindemittels eine Korngröße zwischen 0-10 mm aufweisen.

Fig.1

Fig 2

Fig.3

3 0117890

8918